# EUROPEAN PATENT APPLICATION

(11) **EP 4 711 757 A1**
(43) Date of publication of application: **18.03.2026**
(21) Application number: 25201411.3
(22) Date of filing: 10.09.2025
(51) Int. Cl.: G01N 29/30, G01S 7/52

(54) **ARTIFICIAL FLAW METHOD FOR ULTRASONIC DIFFRACTION INSPECTION SAMPLE**

(30) Priority: 16.09.2024 US 202418886234
(71) Applicant: RTX Corporation, Farmington, CT 06032 (US)
(72) Inventor: Raulerson, David A., Palm Beach Gardens, FL 33410 (US); Engle, Brady J., Ames, IA 50010 (US); Harmon, Aaron C., Palm Beach Gardens, FL 33418 (US)
(74) Representative: Schmitt-Nilson Schraud Waibel Wohlfrom Patentanwälte Partnerschaft mbB

(57) **Abstract**

An artificial diffraction inspection sample including a sample component having a component body with an exterior surface; and a complimentary flat bottom hole formed in the component body, the complimentary flat bottom hole comprising a complimentary bottom surface with a complimentary incidence angle, the complimentary bottom surface being rotated around an acoustic path vector; wherein the complimentary bottom of the complimentary flat bottom hole represents an axial-radial crack.

## Description

The present disclosure is directed to the improved process for ultrasonic diffraction inspection.

Ultrasonic inspections are used for the detection of internal flaws in rotating disk components. The inspections are often performed using one transducer for both sending and receiving (pulse-echo) an acoustic wave or two transducers, one for sending an acoustic wave and one for receiving an acoustic wave. The transducers each may have a single acoustic element or an array of acoustic elements.

Historical inspections, are usually designed to detect volumetric defects, based on pulse-echo inspection mode. If there is an internal volumetric flaw, with adequate characteristics (size, shape, acoustic properties, etc.) then it may be possible to receive a reflection of the acoustic wave, from the flaw. Since flaw characteristics are important for flaw detection, the shape is a critical parameter. If the shape is relatively planar, as in the case of a crack, then detection by way of reflection may be considerably inhibited, depending on crack orientation relative to the acoustic wave. For cracks, whose orientation is such that the crack surface is normal and the acoustic wave propagation direction are not parallel (mal-oriented), then the reflection mode is somewhat minimized and the acoustic energy is primarily diffracted from the edge of the crack and returned to the transducer. The diffraction response is based on the crack effective radius and the sound path incidence angle on the crack. The diffraction mode is usually characterized by weaker returned signals versus the reflection mode, as is the case of the "mal-oriented" crack. One example of a mal-oriented crack is a crack in the axial-radial plane of an engine disk.

Inspections are typically assessed using a Probability of Detection (POD) methodology. A POD analysis is used to determine an inspections capability. It is preferred that the POD sample(s) be developed using flaws that are characteristic of the inspection's target flaws so that the POD reflects the "real" inspection behavior. For inspections targeting mal-oriented cracks then cracks would be the preferred flaw type but fabrication of samples with internal cracks is nearly impossible.

Traditional flaws used for ultrasonic calibration and POD purposes, are flat bottom holes (FBH). The FBHs are relatively easy to produce, by either mechanical drilling or Electro-discharge Machining (EDM), to name two commonly used approaches. FBHs as targets for volumetric flaws, in reflection mode, are very common and accepted for use as artificial flaws for calibration and POD samples.

In accordance with the present disclosure, there is provided an artificial diffraction inspection sample comprising a sample component having a component body with an exterior surface; and a complimentary flat bottom hole formed in the component body, the complimentary flat bottom hole comprising a complimentary bottom surface with a complimentary incidence angle, the complimentary bottom surface being rotated around an acoustic path vector; wherein the complimentary bottom of the complimentary flat bottom hole represents an axial-radial crack.

Particular embodiments further may include at least one, or a plurality of, the following optional features, alone or in combination with each other:

A further embodiment of any of the foregoing embodiments may additionally and/or alternatively include the complimentary bottom surface can be configured in multiple rotation planes.

A further embodiment of any of the foregoing embodiments may additionally and/or alternatively include complimentary bottom surface of the complimentary flat bottom hole is formed to represent at least one surface rotated about the acoustic path vector.

A further embodiment of any of the foregoing embodiments may additionally and/or alternatively include the complimentary bottom surface includes edges, wherein the edges of the complimentary bottom surface are configured to create diffracted energy received by sensors during testing.

A further embodiment of any of the foregoing embodiments may additionally and/or alternatively include a complimentary flat bottom hole is responsive for a given inspection acoustic wave angle.

A further embodiment of any of the foregoing embodiments may additionally and/or alternatively include the complimentary bottom surface comprises a reflective surface.

A further embodiment of any of the foregoing embodiments may additionally and/or alternatively include the artificial diffraction inspection sample further comprising a counter bore transition feature formed distally from a sound entry surface at the exterior surface mitigating interference from an artificial signal reflected from the counter bore transition feature.

In accordance with the present disclosure, there is provided an artificial diffraction inspection sample comprising a sample disk having a disk body with an exterior surface; a flat bottom hole formed in the disk body extending from the exterior surface to a bottom surface, the bottom surface being located in an axial-radial plane of the disk body, the bottom surface having an incidence angle with respect to an acoustic path vector, wherein the bottom of the flat bottom hole represents an axial-radial crack; and a complimentary flat bottom hole formed in the disk body, the complimentary flat bottom hole comprising a complimentary bottom surface with a complimentary incidence angle, the complimentary bottom surface being rotated around the acoustic path vector.

Particular embodiments further may include at least one, or a plurality of, the following optional features, alone or in combination with each other:
A further embodiment of any of the foregoing embodiments may additionally and/or alternatively include the complimentary bottom surface of the complimentary flat bottom hole is formed to represent at least one surface rotated about the acoustic path vector.

A further embodiment of any of the foregoing embodiments may additionally and/or alternatively include the complimentary bottom surface includes edges, wherein the edges of the complimentary bottom surface are configured to create diffracted energy received by sensors during testing.

A further embodiment of any of the foregoing embodiments may additionally and/or alternatively include the complimentary flat bottom hole is responsive for a given inspection acoustic wave angle.

A further embodiment of any of the foregoing embodiments may additionally and/or alternatively include the complimentary bottom surface comprises a reflective surface.

A further embodiment of any of the foregoing embodiments may additionally and/or alternatively include the artificial diffraction inspection sample further comprising a counter bore transition feature formed distally from a sound entry surface at the exterior surface, configured to mitigate interference from an artificial signal reflected from the counter bore transition feature.

In accordance with the present disclosure, there is provided a process for an artificial diffraction inspection sample comprising forming a sample disk having a disk body with an exterior surface; forming a flat bottom hole in the disk body extending from the exterior surface to a bottom surface; locating the bottom surface in an axial-radial plane of the disk body, the bottom surface having an incidence angle with respect to an acoustic path vector, wherein the bottom of the flat bottom hole represents an axial-radial crack; and forming a complimentary flat bottom hole in the disk body, the complimentary flat bottom hole comprising a complimentary bottom surface with a complimentary incidence angle with respect to the acoustic path vector; and rotating the complimentary bottom surface around the acoustic path vector.

Particular embodiments further may include at least one, or a plurality of, the following optional features, alone or in combination with each other:
A further embodiment of any of the foregoing embodiments may additionally and/or alternatively include the process further comprising forming the complimentary bottom surface of the complimentary flat bottom hole to represent at least one surface rotated about the acoustic path vector.

A further embodiment of any of the foregoing embodiments may additionally and/or alternatively include the process further comprising forming edges in the complimentary bottom surface; and configuring the edges of the complimentary bottom surface to create diffracted energy configured to be received by sensors during testing.

A further embodiment of any of the foregoing embodiments may additionally and/or alternatively include the process further comprising configuring the complimentary flat bottom hole responsive for a given inspection acoustic wave angle.

A further embodiment of any of the foregoing embodiments may additionally and/or alternatively include the process further comprising forming the complimentary bottom surface as a reflective surface.

A further embodiment of any of the foregoing embodiments may additionally and/or alternatively includethe process further comprising forming alternate complementary angles; configuring the alternate complementary angles to aid in fabrication where the flat bottom hole is positioned outside of the axial-radial plane.

A further embodiment of any of the foregoing embodiments may additionally and/or alternatively includethe process further comprising forming a counter bore transition feature distally from a sound entry surface at the exterior surface; and configuring the distance between the counter bore transition feature and the sound entry surface to mitigate interference from an artificial signal reflected from the counter bore transition feature.

Other details of the process for ultrasonic diffraction inspection are set forth in the following detailed description and the accompanying drawings wherein like reference numerals depict like elements.
Fig. 1 is a schematic representation of an exemplary diffraction sample with flat bottom holes.
Fig. 2 is a schematic representation of an exemplary set of flat bottom hole planes being rotated about a sound path vector.
Fig. 3 is a schematic representation of an exemplary CAD diffraction sample disk with multiple drill paths.

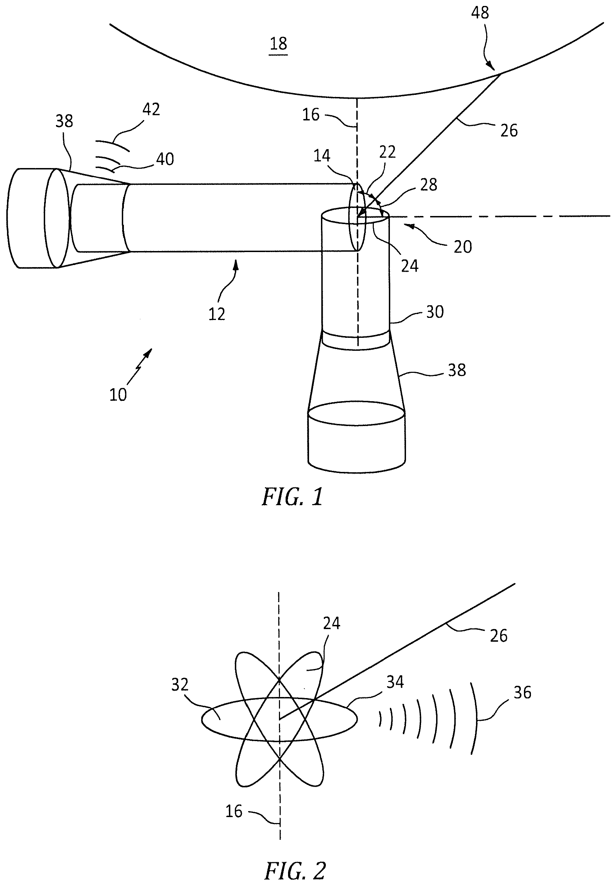

Referring now to Fig. 1, an exemplary diffraction sample disk 10 is shown. It is contemplated to fabricate a diffraction-based sample body 10 with flat bottom holes 12 instead of the traditional reflection-based sample. The diffraction sample 10 can include drilling the flat bottom holes 12 so that the bottom 14 of the hole is located in an axial-radial (A-R) plane 16 of a sample disk 18. The flat bottom hole 12 is formed by drilling normal to the A-R plane 16, as shown, which results in the bottom 14 of the flat bottom hole representing an A-R crack 20.

The disclosure includes the fabrication of a diffraction-based sample 10 with artificial flaws that behave like the A-R plane "crack" but are easier to fabricate. The flat bottom hole 12 can be used as an alternate flaw to the A-R crack 20. To maintain the same diffraction response when testing, an incidence angle 22 with respect to the bottom 14 surface should be maintained. To accomplish this, a complimentary bottom surface 24 is rotated around an acoustic (sound) path vector 26, with a complimentary incidence angle 28. Note that the incidence angle 22 on the A-R flaw 26 changes with depth from any non-flat surface for a disk shape. The incidence angle 22 variation is associated with a curved entry surface. Thru a flat surface, the incidence angle 22 on the crack 20 is constant with depth.

Also referring to Fig. 2, the complimentary bottom surface 24 is shown in multiple rotation planes. The complimentary bottom surface 24 of a complimentary flat bottom hole 30 can be formed in any number of surfaces rotated about the sound path vector 26. The complimentary bottom surface 24 can be a reflective surface 32. The edges 34 of the complimentary bottom surface 24 can create the diffracted energy 36 that is received by the sensors during the testing. The diffraction energy 36 can have a non-linear relationship with respect to the effective radius of the crack surface to be detected. The radius at the crack edge, where the energy is diffracted, affects the response. Cracks are often elliptical and so the radius is dependent on orientation of crack with respect to the vector 26.

It is also noted that a counter bore transition region 38 of the flat bottom holes 12 can create reflected energy 40 that can represent an artificial signal 42 that has to be taken into consideration during analysis of the testing signals. There will be a time window available to capture the signal from the diffraction energy 36 and reflected energy 40. The exemplary flat bottom holes 12 are appropriate for a given inspection acoustic wave angle. A different sample design 10 can be required if the acoustic wave angle is changed. The complementary angle acoustic wave response is ideally the same for the case where the flaw is rotated 180 degrees around the sound path vector 26 to get to the complementary angle 28 (FBH normal vector is in same plane after rotation). But due to the asymmetry of the acoustic beam, there could be a slight difference in the response. There would be less effect for the case where the flat bottom hole 24 diameter is smaller than the acoustic beam. Alternate complementary angles 28 could be used as well to aid in fabrication where the flat bottom hole 30 is positioned outside of the initial flat bottom hole 12 normal vector plane (outside of axial-radial plane). As with the in-plane case, the diffraction response may deviate some due to the out of plane asymmetry of the beam created by the part geometry and the tilting of acoustic beam 26.

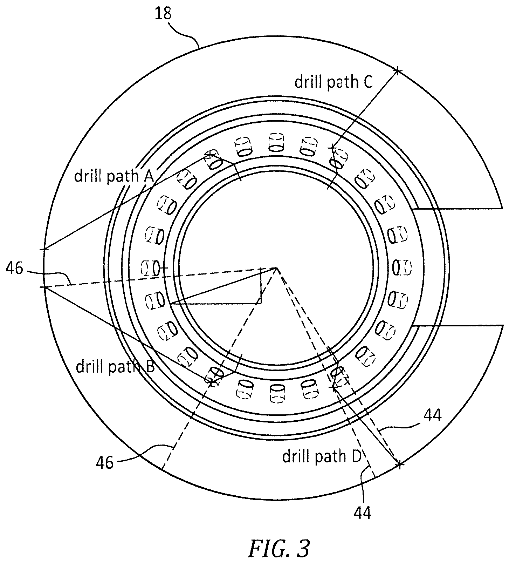

Referring also to Fig. 3, an exemplary CAD model for a diffraction sample disk is shown. The CAD model for a diffraction sample disk can demonstrate the characteristic of same incidence angle 22 but having different drill paths A, B, C, and D. Drill paths A and C are complimentary and B and D are complimentary.

As seen in Fig. 3, the drill path angle is much smaller. The angle between dashed lines 44 versus dashed lines 46 requiring less volume of material and allowing for more flat bottom holes 12 to be placed in the same axial volume. In the example shown in Fig. 3, the volume of material required for drilling C or D versus A or B, is about 1/8^{th}. The drill path will be shorter, requiring less machining and less variability with flat bottom hole bottom 14 positioning. In the example shown in Fig. 3, the drill path length for C and D is about half that of A and B. The counter bore transition feature 38 ends up being farther away from a sound entry surface at exterior surface 48 resulting in less interference for drill paths C and D versus drill paths A and B.

A technical advantage of the disclosed process for ultrasonic diffraction inspection includes fabricating a diffraction-based sample with flat bottom holes instead of a reflection-based sample to aid in the detection of mal-oriented cracks.

Another technical advantage of the disclosed process for ultrasonic diffraction inspection includes creating artificial flaws that behave like the A-R plane "crack" but are easier to fabricate.

Another technical advantage of the disclosed process for ultrasonic diffraction inspection includes forming a complimentary bottom surface which is rotated around an acoustic (sound) path vector, with a complimentary incidence angle.

Another technical advantage of the disclosed process for ultrasonic diffraction inspection includes maintaining the same diffraction response when testing.

Another technical advantage of the disclosed process for ultrasonic diffraction inspection includes forming a complimentary bottom surface in multiple rotation planes.

There has been provided a sample and a process for ultrasonic diffraction inspection. While the sample and the process for ultrasonic diffraction inspection has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. An artificial diffraction inspection sample comprising:
a sample component having a component body with an exterior surface; and
a complimentary flat bottom hole formed in the component body, the complimentary flat bottom hole comprising a complimentary bottom surface with a complimentary incidence angle, the complimentary bottom surface being rotated around an acoustic path vector; wherein the complimentary bottom of the complimentary flat bottom hole represents an axial-radial crack.

2. The artificial diffraction inspection sample according to claim 1, wherein the complimentary bottom surface can be configured in multiple rotation planes.

3. The artificial diffraction inspection sample according to claim 1 or 2, wherein complimentary bottom surface of the complimentary flat bottom hole is formed to represent at least one surface rotated about the acoustic path vector.

4. The artificial diffraction inspection sample according to any of claims 1 to 3, wherein the complimentary bottom surface includes edges, wherein the edges of the complimentary bottom surface are configured to create diffracted energy received by sensors during testing.

5. The artificial diffraction inspection sample according to any of claims 1 to 4, wherein a complimentary flat bottom hole is responsive for a given inspection acoustic wave angle.

6. The artificial diffraction inspection sample according to any of claims 1 to 5, wherein the complimentary bottom surface comprises a reflective surface.

7. The artificial diffraction inspection sample according to any of claims 1 to 6, further comprising:
a counter bore transition feature formed distally from a sound entry surface at the exterior surface mitigating interference from an artificial signal reflected from the counter bore transition feature.

8. The artificial diffraction inspection sample according to any of claims 1 to 7, wherein:
The sample component comprises a sample disk having a disk body with the exterior surface;
a flat bottom hole is formed in the disk body extending from the exterior surface to a bottom surface, the bottom surface being located in an axial-radial plane of the disk body, the bottom surface having an incidence angle with respect to an acoustic path vector, wherein the bottom of the flat bottom hole represents an axial-radial crack; and
the complimentary flat bottom hole is formed in the disk body, the complimentary flat bottom hole comprising a complimentary bottom surface with a complimentary incidence angle, the complimentary bottom surface being rotated around the acoustic path vector.

9. The artificial diffraction inspection sample according to claim 8, wherein the complimentary bottom surface of the complimentary flat bottom hole is formed to represent at least one surface rotated about the acoustic path vector; and/or
wherein the complimentary bottom surface includes edges, wherein the edges of the complimentary bottom surface are configured to create diffracted energy received by sensors during testing; and/or
wherein the complimentary flat bottom hole is responsive for a given inspection acoustic wave angle; and/or
wherein the complimentary bottom surface comprises a reflective surface; and/or
further comprising:
a counter bore transition feature formed distally from a sound entry surface at the exterior surface, configured to mitigate interference from an artificial signal reflected from the counter bore transition feature.

10. A process for an artificial diffraction inspection sample comprising:
forming a sample disk having a disk body with an exterior surface;
forming a flat bottom hole in the disk body extending from the exterior surface to a bottom surface;
locating the bottom surface in an axial-radial plane of the disk body, the bottom surface having an incidence angle with respect to an acoustic path vector, wherein the bottom of the flat bottom hole represents an axial-radial crack; and
forming a complimentary flat bottom hole in the disk body, the complimentary flat bottom hole comprising a complimentary bottom surface with a complimentary incidence angle with respect to the acoustic path vector; and
rotating the complimentary bottom surface around the acoustic path vector.

11. The process according to claim 10, further comprising:
forming the complimentary bottom surface of the complimentary flat bottom hole to represent at least one surface rotated about the acoustic path vector.

12. The process according to claim 10 or 11, further comprising:
forming edges in the complimentary bottom surface; and
configuring the edges of the complimentary bottom surface to create diffracted energy configured to be received by sensors during testing.

13. The process according to any of claims 9 o 12, further comprising:
configuring the complimentary flat bottom hole responsive for a given inspection acoustic wave angle.

14. The process according to any of claims 10 to 13, further comprising:
forming the complimentary bottom surface as a reflective surface.

15. The process according to any of claims 10 to 14, further comprising:
forming alternate complementary angles;
configuring the alternate complementary angles to aid in fabrication where the flat bottom hole is positioned outside of the axial-radial plane; and/or
further comprising:
forming a counter bore transition feature distally from a sound entry surface at the exterior surface; and
configuring the distance between the counter bore transition feature and the sound entry surface to mitigate interference from an artificial signal reflected from the counter bore transition feature.
